(19) Europäisches Patentamt / European Patent Office / Office européen des brevets

(11) **EP 2 944 919 B1**

(12) **EUROPÄISCHE PATENTSCHRIFT**

(45) Veröffentlichungstag und Bekanntmachung des Hinweises auf die Patenterteilung:
**22.01.2020 Patentblatt 2020/04**

(51) Int Cl.:
**G01C 1/02** (2006.01)  **G01C 15/00** (2006.01)
**G01S 7/481** (2006.01)  **G02B 27/42** (2006.01)
**G02B 25/00** (2006.01)

(21) Anmeldenummer: **14168096.7**

(22) Anmeldetag: **13.05.2014**

(54) **GEODÄTISCHES GERÄT MIT DIFFRAKTIVEN OPTISCHEN ELEMENTEN**

GEODESIC INSTRUMENT WITH DIFFRACTING OPTICAL ELEMENTS

INSTRUMENT GÉODÉSIQUE AVEC ÉLÉMENTS OPTIQUES DIFFRACTIFS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.11.2015 Patentblatt 2015/47**

(73) Patentinhaber: **Leica Geosystems AG**
**9435 Heerbrugg (CH)**

(72) Erfinder:
 • **Kipfer, Peter**
   **9443 Widnau (CH)**
 • **Lais, Josef**
   **9437 Marbach (CH)**

(74) Vertreter: **Kaminski Harmann**
**Patentanwälte AG**
**Landstrasse 124**
**9490 Vaduz (LI)**

(56) Entgegenhaltungen:
**DE-A1- 19 621 196      US-A- 5 148 314**
**US-A1- 2013 063 812      US-B2- 6 501 541**

**Beschreibung**

Die Erfindung betrifft ein geodätisches Fernrohr, beispielsweise für einen Theodoliten, mit einem, eine optische Achse definierenden, abbildenden optischen System mit einem Beobachtungsstrahlengang zur Abbildung eines Zielobjekts durch ein Okular und/oder auf einen Kamerasensor, zur Erfassung und/oder Bereitstellung eines Bildes des anvisierten Zielobjekts.

Anzieleinrichtungen, insbesondere Fernrohre, werden für viele, insbesondere auch geodätische, bautechnische und militärische, Anwendungen benötigt, so beispielsweise zur direkten visuellen Beobachtung durch ein Okular und/oder Bildaufnahme mit einer Kamera. Im Rahmen der Geodäsie ist dabei die Kopplung einer reinen Beobachtung mit einer Entfernungsmessung zu einem angezielten Zielobjekt von besonderer Bedeutung, wofür, zusätzlich zu den optischen Systemkomponenten für einen Fernrohrstrahlengang, eine Integration optischer Baugruppen zum Ein- und Auskoppeln von Sendestrahlen bzw. Entfernungsmessstrahlen in ein entsprechendes geodätisches Gerät erforderlich ist. Insbesondere eine geforderte hohe Messgenauigkeit der Entfernungsmessung verlangt dabei höchste Positions- und Winkelstabilität der beteiligten Strahlengänge und zugeordneten Baugruppen.

Der optische Aufbau von Fernrohren ist insbesondere bestimmt durch die Funktion des Fernrohres, beispielsweise im Hinblick auf Lichtstärke, Abbildungsqualität sowie Fokussier- und Vergrößerungsmechanismen. Im Gegensatz zu optischen Messgeräten, wie beispielsweise einem elektrooptischen Entfernungsmesser mit einem optischen Empfänger zum Empfang von Strahlenbündeln, werden die Strahlenbündel im Fernrohr beispielsweise vom menschlichen Auge empfangen, wozu eine Abbildung mit entsprechend höchster Qualität erforderlich ist. Eine Herausforderung für Optik-Ingenieure stellt die Herstellung von Fernrohren mit kurzer Baulänge und dennoch gattungsgemäß hoher Abbildungsqualität dar. Zum Erreichen dieser Abbildungsqualität ist die Korrektur von Abbildungsfehlern, wie sphärische und chromatische Aberration, Koma und Verzeichnung erforderlich. Diese Korrekturen werden mittels optischer Bauelemente durchgeführt, wobei Parameter wie die Krümmung von Linsen, die Anzahl, das Material mit den zugehörigen optischen Eigenschaften und die Anordnung der Bauelemente zur Korrektur, sowie die hochpräzise Fertigung derselben und exakte Ausrichtung im Fernrohr zur Bildqualität beitragen.

In einem Fernrohr erfordert eine geforderte hohe Abbildungsqualität die Erzeugung eines in seiner Auflösung beugungsbegrenzten Bildes in der Bildebene des Fernrohrs. Insbesondere soll der Bildkreisradius in der Bildebene - das ist der durch die vorgenannten Abbildungsfehler bedingte Lichtfleck des Empfangsstrahlenbündels von einem Zielobjekt in der Bildebene - als unterer Grenzwert einzig durch das Beugungslimit bestimmt sein und nur Bruchteile eines Mikrometers betragen. Um dieses erreichen zu können, sind Korrekturen zur Begrenzung der (gesamten) Aberrationen auf unter ein Viertel der Wellenlänge $\lambda$ des sichtbaren Lichts, d.h. auf etwa 100 nm bis 200 nm, erforderlich.

Eine Herausforderung stellt dabei stets die Korrektur der chromatischen Aberrationen dar. Die Abhängigkeit des Brechungsindex eines Mediums, insbesondere also auch einer refraktiv wirkenden Linse, von der Wellenlänge bewirkt bekannterweise einen gegenseitigen Versatz der Bildebene / "Schärfeebene" für unterschiedliche Wellenlängen. Als klassische Abhilfe gegen dieses Phänomen wurden achromatische Linsen (Achromaten) entwickelt. Diese Achromaten, am meisten verbreitet als "achromatisches Duplett", sind gekennzeichnet als eine Zusammenstellung von Bestandteilen mit unterschiedlicher Dispersion, d.h. mit unterschiedlichem Brechungsindex für verschiedene Wellenlängen. Am häufigsten wird dabei ein Ensemble von Elementen aus Flint- und Kronglas verwendet. Es gelingt mit Achromaten, gleichzeitig für zwei Wellenlängen eine chromatisch zumindest annähernd fehlerfreie Abbildung zu realisieren. Die Bilder für die anderen Wellenlängen außerhalb des chromatisch korrigierten Bereichs liegen jedoch weiterhin vor oder hinter der Schärfeebene; dieser Restfehler wird auch als "sekundäres Spektrum" bezeichnet. Der chromatische Fehler lässt sich weiter reduzieren durch Verwendung einer Kombination von mehr als zwei Linsen unterschiedlicher Materialien.

Es wird in der Bezeichnung unterschieden zwischen "Achromaten" und "Apochromaten", womit die Art der Korrektur, nämlich für zwei oder drei korrekt fokussierte Wellenlängen, gekennzeichnet wird, nicht aber das Ausmaß der Defokussierung der anderen Wellenlängen. Die Wirkungsweise sowohl von Achromaten als auch von Apochromaten kann also durch Verwendung von Gläsern mit möglichst niedriger Dispersion, anstelle von regulären Gläsern mit typischerweise relativ hoher Dispersion, auch außerhalb des spezifischen Korrekturbereichs verbessert werden. Eine besonders niedrige Dispersion weisen Gläser, welche Fluorit ($CaF_2$) enthalten, auf, so dass bereits zwei miteinander kombinierte Linsen aus diesem Material eine sehr weitgehende Korrektur bewirken können.

Der Unterschied der Abbe-Zahlen für verschiedene Wellenlängen wird auch als "Teildispersion" P bezeichnet. Neben dem Brechungsindex n und der Abbeschen Zahl $\nu$ ist als Qualitätskriterium für visuelle Systeme also auch die relative Teildispersion P wichtig. Beispielsweise ist es die relative Teildispersion $P_{g,F}$ bezogen auf die beiden Wellenlängen g = 435.8 nm und F = 486.1 nm. Normalgläser sind gekennzeichnet durch eine relative Teildispersion $P_{g,F} = a_{g,F} + b_{g,F} \cdot v_d$, welche Beziehung die sogenannte Normalgerade beschreibt. Die Konstanten $a_{g,F}$ und $b_{g,F}$ werden üblicherweise $a_{g,F}$ = 1.7241 und $b_{g,F}$ = -0.008382 gesetzt und $v_d$ bezeichnet die Abbesche Zahl bezogen auf die Wellenlänge d = 587.6 nm. Diese Beziehungen sind beispielsweise in Naumann/Schröder: "Bauelemente der Optik", Kapitel 3.3.2 "Optische Gläser" (Carl Hanser Verlag, 6. Auflage) dargestellt und beschrieben.

Die Optimierung einer chromatischen Korrektur kann mathematisch beschrieben werden. Dazu wird, für ein Duplett, bestehend aus zwei miteinander in Kontakt stehenden dünnen Linsen, die Abbe-Zahl der Materialien benutzt zur Bestimmung der korrekten fokalen Länge der Linsen. Es wird die Forderung erhoben:

$$f_1 \cdot v_1 \; + \; f_2 \cdot v_2 \; = \; 0$$

Dabei bezeichnen $f_1$ und $f_2$ die Brennweiten der beiden Linsen für die Fraunhofer D-Linie ($\lambda$ = 589.2 nm) sowie $v_1$ und $v_2$ die zugehörigen Abbe-Zahlen der Materialien der ersten und der zweiten Linse. Da die Abbe-Zahlen der Linsen positiv sind, muss zur Erfüllung der Bedingung eine der fokalen Längen negativ, d.h. die zugehörige Linse divergierend sein.

Das Prinzip der chromatischen Aberration wird in Zusammenhang mit den Figuren zu dieser Patentanmeldung noch genauer illustriert und erklärt.

Für abbildende Systeme, wie Fernrohre, besteht die Forderung nach einer scharfen Abbildung möglichst über das gesamte visuelle Spektrum, also die Verringerung bzw. Eliminierung des sekundären Spektrums. Typischerweise wird gefordert, dass der Farblängsfehler (sekundäres Spektrum) weniger als 0.2% der Brennweite eines Objektivs beträgt.

Zur Korrektur von Abbildungsfehlern für visuelle Systeme ist eine Vielzahl von optischen Spezialgläsern bekannt, welche allerdings teilweise relativ kostspielig sind. Zur Farbkorrektur (Reduktion der chromatischen Aberration) über einen breiten Spektralbereich, also zur Verringerung oder Behebung des sekundären Spektrums, eignen sich insbesondere Spezialgläser mit einer relativen Teildispersion, die - gegebenenfalls stark - von der relativen Teildispersion der Normalgläser abweicht.

Vor allem auch aufgrund der vorgenannten diversen Korrekturen, die für eine Erzeugung einer hochqualitativen Abbildung eines Zielobjekts notwendig sind, weisen klassische Fernrohre mit refraktiven optischen Elementen, vor allem Glaslinsen, vielfach eine Reihe von Nachteilen auf. Diese betreffen beispielsweise eine große Baulänge der Optik, eine Vielzahl diskreter Einzelelemente sowie ein hohes Gesamtgewicht und eine schwierige und aufwendige Justierung der Einzelelemente im Strahlengang, was zusammen zu hohen Herstellungskosten führt.

Zur Überwindung dieser Nachteile wurden in den letzten Jahren verschiedene Ansätze verfolgt. Diese betrafen einerseits einen Ersatz von Glas- durch Plastikelemente. Dieses wurde dadurch ermöglicht, dass die optische Qualität von Plastikerzeugnissen inzwischen der optischen Qualität von Glaserzeugnissen weitestgehend nahekommen kann. Dieser Ersatz ermöglicht eine erste Gewichtsverminderung und auch eine Verringerung der Einzelelement-Kosten, insbesondere wenn eine Herstellung durch Abformung oder Spritzguss möglich ist. Die Systemkosten können insbesondere dann gesenkt werden, wenn eine Verwendung von einstückigen Komponenten zur Erfüllung mehrerer Funktionen möglich ist, was auch die Anzahl notwendiger einzelner Justierschritte vermindert.

Weitere Vorteile ergeben sich andererseits durch einen Einsatz von diffraktiven optischen Elementen beispielsweise Fresnel-Linsen, wodurch die Stärke der Richtungsbeeinflussung / Ablenkung eines Lichtstrahls nicht mehr von der optischen Weglänge in dem optisch durchdrungenen optischen Element, sondern von der Art und geometrischen Verteilung der diffraktiven Strukturen eines diffraktiven optischen Elements abhängt, wodurch eine weitere Verminderung des Volumens und damit von Masse und Gewicht der Einzelelemente erreicht wird. Aufbau und Funktion und Fresnel-Linsen werden ebenfalls im Zusammenhang mit den Figuren noch genauer illustriert und erklärt.

Mittels diffraktiver optischer Strukturen zum Ersatz von Glaslinsen können Systeme aus mehreren einzelnen Linsen durch ein Einzelelement ersetzt werden. Es können dabei sowohl sphärische Aberrationen als auch chromatische Fehler korrigiert werden, wofür sich diffraktive optische Elemente besonders gut eignen. Für eine chromatische Korrektur wird insbesondere die erste diffraktive Ordnung (erste Beugungsordnung) eines diffraktiven optischen Elements verwendet. Hierfür beträgt im sichtbaren Spektrum die Abbe-Zahl typischerweise zwischen -3.5 und -3.3 (abhängig vom jeweils verwendeten Material), ist also im Gegensatz zu refraktiv wirkenden optischen Elementen (z. B. aus Glas oder Plastik) negativ. Gebräuchliche Gläser haben eine Abbe-Zahl zwischen 20 und 80. Dieses hat zur Folge, dass zur Farbkorrektur einer refraktiven Linse nur eine sehr schwach wirkende diffraktive Linse erforderlich ist. - Korrekturen mit höheren Beugungsordnungen erweisen sich als nicht vorteilhaft, da die diffraktive Struktur ihren diffraktiven Charakter verliert und immer mehr refraktive Eigenschaften zeigt.

In der Patentschrift DE 199 41 638 C1 wird ein geodätisches Gerät mit einem Fernrohr und einer Laseranordnung zur Aussendung einer Messstrahlung, bei der in einem Anregungsstrahlengang für das ausgesandte Laserlicht ein diffraktives optisches Element eingesetzt ist, offenbart. Dabei ist das diffraktive optische Element als eine mit einem Strukturhologramm versehene transparente Platte ausgebildet, die vor oder nach einem Umlenkelement im Anregungsstrahlengang angeordnet ist, und dient dazu, den kollimierten Anregungsstrahl divergierend konzentrisch auf ein kreisförmiges Strahlenbündel zu beugen.

In der US 6,501,541 B2 wird ein elektronisches Entfernungsmessgerät mit Anzielfernrohr und insbesondere einem als ein Fresnel-Spiegel oder einem diffraktiven Gitter ausgebildeten diffraktiven optischen Element in einem Empfangsstrahlengang des Geräts, für eine wellenlängenselektive Strahlumlenkung des Lichts vom Zielobjekt in den Beobachtungsstrahlengang des Fernrohrs, offenbart. - Bei dieser Anwendung hat der Einsatz des diffraktiven optischen Elements also keine grundsätzliche Gewichtsreduzierung oder Verminderung von Baugröße / Komponentenanzahl des Geräts zur Folge, da die hier benutzte Funktion auch durch klassische wellenlängenselektive und strahlumlenkende Elemente, wie beispielsweise Prismen, erfüllt werden kann, wie dieses in der Beschreibung dieses Dokuments auch bestätigt wird.

Die US 6,587,244 B1 betrifft ein optisches Kommunikationssystem für ein geodätisches Gerät, beispielsweise einen Theodoliten. Die dieser Patentschrift zugrunde liegende Erfindung dient der Lösung der Aufgabe, eine zufriedenstellende Funktion des Gerätes sowohl für kurze als auch lange Entfernungen vom Zielobjekt zum Gerät zu ermöglichen, ohne dafür den erforderlichen Detektionsweg im Gerät verlängern zu müssen. Die in diesem Patent offenbarte optische Anordnung umfasst ein diffraktives optisches Element, insbesondere eine Fresnel-Linse oder ein diffraktives Gitter, vor einem Photodetektor in einem Empfangsstrahlengang, jedoch kein diesem Empfangsstrahlengang zuzuordnendes abbildendes optisches System. Das offenbarte diffraktive optische Element übermittelt parallele Lichtanteile eines Kommunikationslichts ohne dessen Beeinflussung, verbunden mit einer konvergierenden Funktion bei der nullten und der ersten Beugungsordnung zwecks deren Leitung auf den Photodetektor.

In der WO 2010/097346 A1 wird ein geodätisches Gerät mit einem Fernrohr offenbart. Um als einen erfindungsgemäß erwünschten Effekt eine scharfe Abbildung aller innerhalb eines Erfassungsbereichs der zugehörigen optischen Anordnung liegenden Punkte einer Zielobjektebene auf der Aufnahmeoberfläche eines eingesetzten Detektors zu bewirken, werden als Alternativen zueinander die Verwendung eines in insbesondere seiner horizontalen Achse eine Bildfeldwölbung aufweisenden Abbildungsobjektivs oder die Verwendung einer diffraktiven Struktur, welche eine einfallswinkelabhängige Variation der Brennweite erzeugt, vorgeschlagen. Die US 2013/063812 A1 offenbart ein optisches System für ein Teleskop, wobei das Objektivlinsensystem ein diffraktives optisches Element umfasst. Die US 5 148 314 A offenbart optische Strukturen umfassend refraktive und diffraktive optische Elemente, insbesondere für Linsen von Teleobjektiven.

In den optischen Systemen der vorgenannten Anordnungen aus dem Stand der Technik werden diffraktive optische Elemente jeweils zur Erfüllung nur einer einzigen Funktionalität verwendet. Die dabei erreichten Resultate erscheinen nicht als mit letzter Sicherheit optimal, beispielweise was optische Abbildungsqualität / chromatische Korrektur betrifft. Eine Aufgabe der vorliegenden Erfindung ist die Bereitstellung eines kompakt aufgebauten geodätischen Geräts, insbesondere eines geodätischen Fernrohrs zur Ermöglichung einer direkten visuellen Betrachtung eines Zielobjekts für einen Beobachter durch ein Okular.
Eine Teilaufgabe ist dabei die Ermöglichung einer Gewichtsreduzierung, im Vergleich zu gattungsgemäßen herkömmlichen Geräten.

Eine weitere Teilaufgabe ist die Gewährleistung einer hohen Abbildungsqualität über einen breiten Wellenlängenbereich, insbesondere im visuellen Teil des Spektrums.

Diese Aufgaben werden durch die Gegenstände der unabhängigen Ansprüche gelöst und durch die Merkmale der abhängigen Ansprüche vorteilhaft weitergebildet. Weitere Vorteile der Erfindung ergeben sich aus der Beschreibung und den zugehörigen Figuren.

Gegenstand der Erfindung ist ein geodätisches Fernrohr, beispielsweise für einen Theodoliten, nach Anspruch 1.

Beispielsweise kann mindestens eines der mindestens zwei diffraktiven optischen Elemente als ein Hybrid aus einer diffraktiven und einer refraktiven, insbesondere asphärischen oder sphärischen, Linse ausgebildet sein, wobei

-    ein erstes der mindestens zwei diffraktiven optischen Elemente als eine Objektivlinse einstückig in Form einer Einzellinse aus einem optisch transparenten Material ausgebildet ist und mindestens eine Linsenfläche eine diffraktive Struktur aufweist,

-    ein zweites der mindestens zwei diffraktiven optischen Elemente als eine entlang der optischen Achse bewegliche Fokussierkomponente (Fokussierglied) ausgebildet, welche mindestens ein diffraktives optisches Element umfasst, und

-    zwischen der Objektivlinse und dem Fokussierglied der Beobachtungsstrahlengang definiert ist.

Damit wird, im Vergleich zu einem Fernrohr mit einem herkömmlichen optischen System, eine wesentlich kompaktere Ausführung des Beobachtungsstrahlengangs ermöglicht, verbunden mit einer deutlichen Gewichtsverminderung. Die Objektivlinse, herkömmlich typischerweise bestehend aus drei Einzellinsen, wird vorteilhaft ersetzt durch ein einstückig ausgeführtes optisches Bauteil. Dadurch, dass die Fokussierkomponente (Fokussierglied) beweglich entlang der optischen Achse angeordnet ist, wird ermöglicht, ein Bild vom Zielobjekt benutzer- und/oder anwendungsabhängig zur visuellen Betrachtung durch das Auge des Benutzers oder zur Abbildung auf einen Kamerasensor scharf zu fokussieren.

Die diffraktiven optischen Elemente können aus Glas, Kunststoff oder Kombinationen aus Glas und Kunst bestehen. Insbesondere, d.h. alternativ oder zusätzlich, können sie durch Replikationstechnik hergestellt sein. Eine replikationstechnische Herstellung wirkt sich typischerweise kostenvermindernd aus.

Insbesondere kann die Objektivlinse ein Material aus Kronglas umfassen. Alternativ oder zusätzlich kann die Objektivlinse ein Material mit einem zusätzlichen replikationstechnisch aufgebrachten Schichtmaterial umfassen. Insbesondere hinsichtlich der Abformtreue ist es dabei vorteilhaft, wenn die Dicke des aufgebrachten Schichtmaterials weniger als 50 $\mu$m beträgt. Bei plan ausgeführten optischen Elementen mit replikationstechnisch aufgebrachtem Schichtmaterial kann - ohne erhebliche Nachteile bzgl. der Abformtreue - die Schichtdicke z.B. auch bis zu ca. 0.15 mm betragen.

Gemäß einer Ausführungsform kann die bewegliche Fokussierkomponente Flintglas und replikationstechnisch hergestellte Elemente umfassen. Insbesondere kann das bewegliche Fokussierglied eine sphärische Kunststofflinse und eine diffraktive Kunststofflinse umfassen.

Gemäß einer weiteren Ausführungsform umfassen die Objektivlinse und die Fokussierkomponente beide als Material jeweils eine Kombination von Kronglas und Flintglas.

Im Speziellen ist die Objektivlinse als ein Hybrid (also aus einer refraktiven, insbesondere asphärischen oder sphärischen, Linse mit einer diffraktiven Struktur) ausgebildet.

Gemäß einer weiteren Ausführungsform sind diffraktive und asphärische Strukturen durch Aufprägung oder Spritzguss hergestellt, insbesondere wobei Asphäritäten klein bemessen sind.

Gemäß einer weiteren Ausführungsform sind die Objektivlinse und die Fokussierkomponente beide jeweils als Hybride ausgebildet.

Z.B. können die Objektivlinse und die Fokussierkomponente beide jeweils einstückig als Einzelelemente ausgebildetsein. Die Objektivlinse, herkömmlich typischerweise bestehend aus drei Einzellinsen, wird ersetzt durch ein einstückig ausgeführtes optisches Bauteil, und die Fokussierkomponente ersetzt herkömmlicherweise zwei für diese Funktion verwendete optische Elemente.

Insbesondere sind die diffraktiven optischen Elemente für Farbkorrekturen mittels ihrer ersten Beugungsordnung und zugleich einer Unterdrückung der nullten und/oder höheren Beugungsordnungen ausgebildet. Dieses kann insbesondere mittels einer Erzeugung großer Streukreise bei einer Beugung für diese Beugungsordnungen erfolgen. Dabei kann des Weiteren ausgeführt sein, dass eine Abbildung verbleibender Intensität von höheren Beugungsordnungen mit einem Anteil von weniger als 5 % einer gesamten Abbildungsintensität erfolgt.

Gemäß einer Ausführungsform wird für eine Korrektur sphärischer Aberrationen eine überlagerte Asphäre verwendet. Damit können sphärische Aberrationen, die von einer Korrektur chromatischer Aberrationen nicht betroffen sind, eliminiert oder zumindest verringert werden.

Gemäß einer weiteren Ausführungsform weist die Apertur mindestens einer der verwendeten Linsen verschiedene Zonen mit unterschiedlichen Eigenschaften auf. Dieses können insbesondere verschiedene Zonen mit unterschiedlichen Brennweiten sein. Dieses ist beispielweise als Ausführungsform für eine Nahbereichsoptik für einen elektronischen Entfernungsmesser vorteilhaft.

Gemäß einer weiteren Ausführungsform sind die diffraktiven optischen Elemente ausgebildet zur Erfüllung verschiedener Funktionalitäten. Diese können, gegebenenfalls zusätzlich zu anderen von diesen diffraktiven Elementen zu erfüllenden Funktionen, eine spektrale oder nicht-spektrale Strahlaufteilung sein.

Gemäß einer weiteren Ausführungsform sind die diffraktiven optischen Elemente ausgebildet zu einer Abbildung auf verschiedene optische Sensoren, insbesondere mittels eines erweiterten Fokusbereichs.

Die Erfindung ist beispielhaft in den nachfolgenden Figuren beschrieben. Gleiche Referenzzeichen kennzeichnen dabei gleichartige Strukturelemente. Dabei zeigen

Fig. 1       schematisch den Aufbau eines Tachymeter-Fernrohrs nach dem Stand der Technik;

Fig. 2a      das Prinzip der chromatischen Aberration einer Linse und zugehöriger Korrekturmöglichkeiten;

Fig. 2b      Aufbau und Funktion von Fresnel-Linsen;

Fig. 3a      stärker detailliert den Beobachtungsstrahlengang einer typischen Ausführungsform des klassischen Fernrohrs gemäß Fig. 1;

Fig. 3b      als Qualitätskriterium für das in Fig. 3a dargestellte optische System des Beobachtungsstrahlengangs die sich am Ausgang des Beobachtungsstrahlengangs ergebende Modulation als Funktion der Ortsfrequenz;

Fig. 4a      ein optisches System für den Strahlengang eines erfindungsgemäßen geodätischen Fernrohrs;

Fig. 4b    wichtige Parameter für die Konstruktion der Objektivlinse 111 des erfindungsgemäßen optischen Systems;

Fig. 4c    wichtige Parameter für die Konstruktion des Fokussierglieds des erfindungsgemäßen optischen Systems; und

Fig. 4d    als Qualitätskriterium für das in Fig. 4a dargestellte optische System des Beobachtungsstrahlengangs die sich am Ausgang des Beobachtungsstrahlengangs ergebende Modulation als Funktion der Ortsfrequenz.

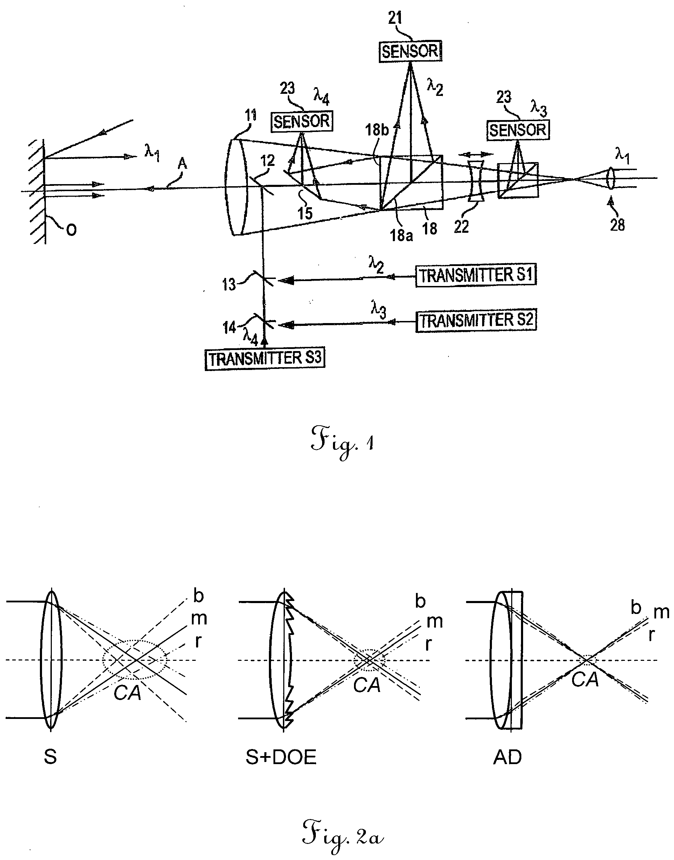

Fig. 1 zeigt schematisch den Aufbau eines Tachymeter-Fernrohrs nach dem Stand der Technik, wobei das Fernrohrobjektiv nur durch eine Frontlinse 11 angedeutet ist. Der Aufbau entspricht im Wesentlichen einer in der EP 1 081 459 B1 offenbarten Anordnung. Alle in diesem System wesentlichen optischen Komponenten sind auf eine gemeinsame optische Achse A ausgerichtet. Auf dieser optischen Achse A ist ein Austrittsspiegel oder Austrittsprisma 12 angeordnet, worüber das jeweilige Strahlenbündel eines von drei

Sendern/Transmittern S1, S2 bzw. S3 in Richtung der optischen Achse A gelenkt wird. Mit der zentralen Spiegelanordnung 12 wird sichergestellt, dass die jeweiligen senderseitigen Strahlenbündel koaxiale Wirkung erzeugen.

Die drei Sender/Transmitter S1, S2 bzw. S3 können beliebige Strahlungsquellen, insbesondere Lichtquellen sein und einen unterschiedlichen und/oder spektral trennbaren Wellenbereich abstrahlen. So emittiert beispielsweise der Sender S1 bei einer Wellenlänge oder einem Wellenlängenbereich $\lambda_2$, der Sender S2 bei einer Wellenlänge oder einem Wellenlängenbereich $\lambda_3$, und der Sender S3 bei einer Wellenlänge oder einem Wellenlängenbereich $\lambda_4$. Beispielhaft unterscheidet sich mindestens einer dieser Wellenlängenbereiche von dem für das Auge sichtbaren Umgebungslicht, das in der Folge mit $\lambda_1$ bezeichnet wird und eine Wellenlänge zwischen etwa 400 nm und 700 nm hat. Die Strahlung jedes dieser drei Sender S1, S2 bzw. S3 verläuft in der aus Fig. 1 ersichtlichen Weise, wobei die Strahlen der Sender S1 und S2 beispielsweise über teildurchlässige Spiegelflächen 13 bzw. 14 in Richtung zum Spiegel 12 umgeleitet werden.

Beispielsweise kann $\lambda_2$ als Wellenlänge für eine automatische Zielerfassung vorgesehen sein und im Infrarotoder im sichtbaren Bereich liegen. $\lambda_4$ liegt, gemäß diesem Beispiel, in einem von $\lambda_2$ abweichenden Infrarotbereich, und $\lambda_3$ liegt im sichtbaren Bereich des Lichtes, ist jedoch ein beugungsarmes Strahlenbündel. - Es wäre auch möglich, lediglich einen einzigen Sender mit einem entsprechend spektral breitbandigen Emissionsspektrum vorzusehen und diesen durch Kombination mit entsprechenden Filtern bzw. Objektiven zur wechselweisen Abgabe von Strahlung unterschiedlicher Wellenlängenbereiche und Divergenzen zu benutzen.

Mittels des Spiegels 12 wird der jeweilige Sendestrahl koaxial entlang der Achse A auf eine Fläche O eines Zielobjektes gelenkt, von wo diese Strahlung entweder über einen an der Fläche O angebrachten Spiegel bzw. Reflektor, wie ein Retroprisma, eine Reflexfolie, einen Rückstrahler, Zieltafeln mit Erkennungsmerkmalen oder auch diffus zum Objektiv 11 zurückgestrahlt bzw. zurückgestreut wird. Das bedeutet, dass von der Fläche O des Zielobjekts reflektierte Strahlen entlang der Achse A koaxial wieder in das Objektiv 11 eintreten.

Im Beobachtungsstrahlengang hinter dem Spiegel 12, d.h. in dem Strahlengang des vom Objekt zurückgestrahlten Lichts, sind Strahlengänge für gemäß dieses Beispiels drei Sensoreinrichtungen vorgesehen. Es kann sich dabei unter anderem um einen positionsempfindlichen Flächensensor 21, wie ein PSD-, CCD-, CMOS-Chip oder ein sonstiges Photo-ASIC, handeln. Im weiteren Verlauf des Beobachtungsstrahlengangs ist eine lediglich durch eine Linse 22 angedeutete Fokussiereinheit angeordnet, um ein scharfes Bild des Zielobjektes in Zusammenwirkung mit einem Okular 28 für eine visuelle Beobachtung zu erzeugen oder auf die Sensorfläche eines Kamerasensors zu projizieren.

Im Fall einer Distanzmesskombination 23 soll diese zweierlei Zwecken dienen, nämlich einerseits zur Distanzmessung über mindestens einen Reflektor bzw. mindestens eine Zielmarke zu einem zu vermessenden Zielobjekt und anderseits zu einem natürlichen Zielobjekt ohne eine solche Zielkennzeichnung. Zu diesem Zweck muss die Distanzmesskombination 23, sofern man nicht für jede Art der Messung gesonderte Sensoreinrichtungen verwenden will, exklusiv für die Wellenbereiche $\lambda_3$ und $\lambda_4$ der Sender S2 und S3 empfindlich gestaltet sein, welche letztere Sender den beiden oben genannten Arten der Distanzmessung zugeordnet sind. Dieses kann beispielsweise unter Verwendung eines geeigneten spektralen Filters geschehen. Alternativ können die von der Achse A weg zu den Einheiten 23 ausspiegelnden Flächen entsprechend wellenlängenselektiv ausgestaltet sein.

Das Fokussierglied 22 ist im Strahlengang des Okulars 28 angeordnet, mit Strahlung im sichtbaren Wellenlängenbereich $\lambda_1$, d.h. aus der Umgebung auf das Zielobjekt einfallenden Lichtes. Wenn nicht nur im visuellen Fernrohrkanal 11, 18, 22, 28 ein scharfes Bild erzeugt werden soll, sondern auch auf dem Bildsensor 21, so ist es vorteilhaft, das Fernrohrsystem 11 in an sich bekannter Weise mit einer Fokussiermöglichkeit auszubilden. Denn der zum Flächensensor 21 führende Strahlengang führt von der optischen Achse A weg mittels eines Strahlenteilerprismas 18, das mit seiner teilverspiegelten Fläche 18a Licht zum Sensor 21 umlenkt. Dieses Prisma 18 besitzt aber auch noch eine vordere teilverspiegelte Fläche 18b, die das einfallende Licht auf einen Spiegel 15 umlenkt, der es seinerseits zur Distanzmesskombination 23 weiter leitet. Vorzugsweise sind die Spiegelflächen 18a bzw. 18b als hochqualitative Dünnschichtfilme, zwecks effizienter spektraler Trennung der auftreffenden Lichtstrahlen unterschiedlicher Wellenlängen ausgebildet.

Fig. 2a illustriert das Prinzip der chromatischen Aberration einer Linse und zugehöriger Korrekturmöglichkeiten. Dabei verdeutlicht die linke Teilabbildung die unterschiedlichen fokalen Längen für verschiedene Lichtwellenlängen (kürzere Wellenlängen für blaues Licht, b, mittlere Wellenlänge m für grünes oder gelbes Licht, und längere Wellenlänge für rotes Licht, r). Im Fall der chromatisch unkorrigierten Linse S besteht eine deutliche chromatische Aberration CA, d.h. Verschiebung des Fokus zwischen den verschiedenen Lichtwellenlängen. Die mittlere Teilabbildung illustriert, dass zur Korrektur der chromatischen Aberration der Linse die Verwendung eines diffraktiven optischen Elements mit zum Glas komplementären Dispersionseigenschaften, S+DOE, geeignet ist. Die chromatische Aberration CA des Abbildungssystems wird dadurch deutlich verringert. Die rechte Teilabbildung illustriert, dass im Bereich des sichtbaren Spektrums ein achromatisches Duplett AD mit einer Kombination von Einzelelementen, beispielsweise aus Kronglas und Flintglas, ebenfalls geeignet ist.

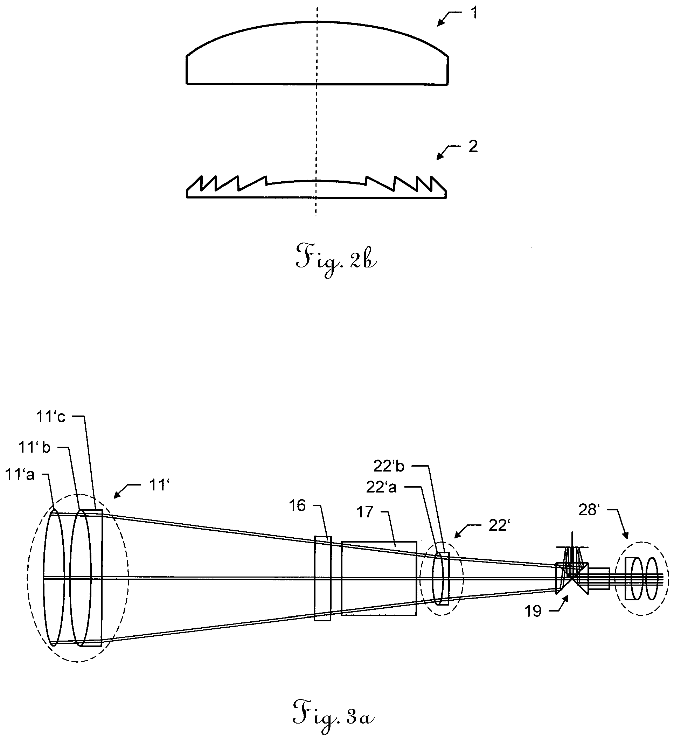

Anhand von Fig. 2b sind Aufbau und Funktion von Fresnel-Linsen illustriert. Dabei sind eine Linse regulärer Ausführungsform (1, oben) und eine Fresnel-Linse (2, unten) von gleicher Brennweite dargestellt. Eine Fresnel-Linse, oder genauer eine "Fresnelsche Stufenlinse", ist eine optische Linse, die um 1822 von dem französischen Physiker Augustin Jean Fresnel erfunden wurde. Durch das angewendete Bauprinzip werden generell Gewicht und Volumen großer Linsen kleiner, was sich besonders bei Linsen mit kurzer Brennweite auswirkt, die in normaler Form sehr dick und vergleichsweise schwer sind. Die Verringerung des Volumens geschieht bei der Fresnel-Linse durch eine Aufteilung in ringförmige Bereiche. In jedem dieser Bereiche wird die Dicke verringert, sodass die Linse eine Reihe ringförmiger Stufen erhält. Da Licht nur beim Passieren der Linsen-Oberflächen gebrochen wird, ist der Brechungswinkel nicht von der Linsendicke, d.h. dem durchlaufenen Linsenvolumen, sondern nur von dem Winkel zwischen den beiden Oberflächen abhängig. Die Linse behält, bei einer im Vergleich zu einer regulären Linse deutlich verminderten Dicke und reduziertem Gewicht, ihre Brennweite bei; allerdings wird die Abbildungsqualität wird durch die Stufenstruktur typischerweise verschlechtert.

Fig. 3a zeigt stärker detailliert den Beobachtungsstrahlengang einer typischen Ausführungsform des klassischen Fernrohrs gemäß Fig. 1. Der Objektivlinse entspricht hier die Linsenkombination 11' und der Fokussierlinse das Fokussierglied 22', ebenfalls ausgeführt als eine Linsenkombination. Mit den Referenzzeichen 16 und 17 sind bedarfsweise im Strahlengang angeordnete spektrale Filter bzw. Umlenk- oder Auskoppelelemente angedeutet. Anstelle des Okulars 28 ist hier ebenfalls eine Linsenkombination 28' dargestellt, vor dem im Strahlengang beispielsweise ein weiteres optisches Umlenkelement oder Umkehrprisma 19 angeordnet ist. - Aus dieser detaillierteren Betrachtung folgt also, dass das optische Beobachtungssystem eines klassischen Fernrohrs eine Vielzahl diskreter optischer Elemente aufweist, was ein relativ hohes Gewicht, einen hohen Platzbedarf für die Anordnung, eine sorgfältige gegenseitige Abstimmung bei der Auswahl der einzelnen einzusetzenden optischen Elemente und deren sorgfältige Justierung im Strahlengang erfordert.

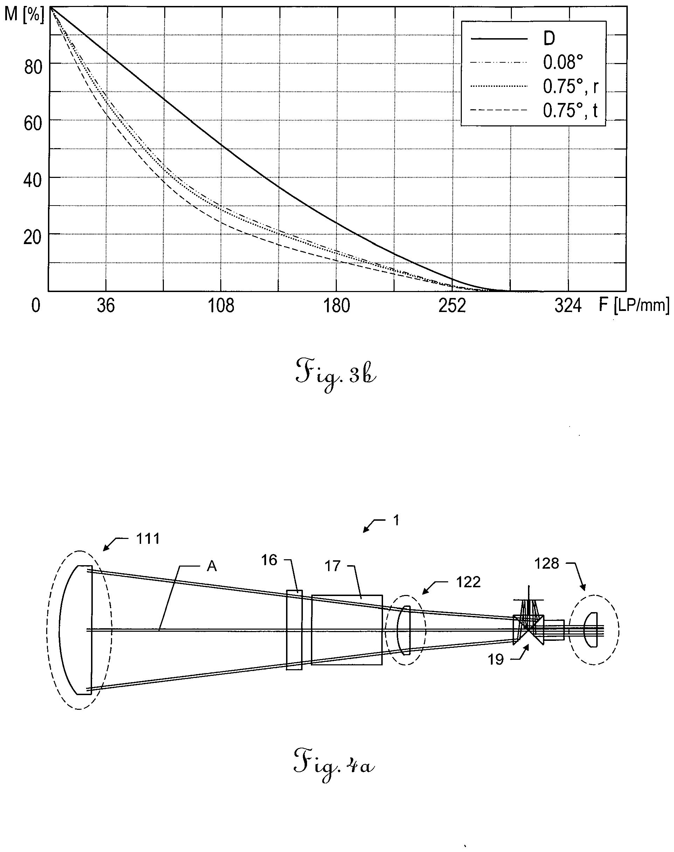

Fig. 3b zeigt als Kriterium für die Abbildungsqualität des in Fig. 3a dargestellten optischen Systems des Beobachtungsstrahlengangs die sich am Ausgang des Beobachtungsstrahlengangs, d.h. am Okular 28', ergebende Modulation, genauer Modulationsübertragung oder -transfer, M (in Prozent %) als Funktion der Ortsfrequenz F ("spatial frequency"), gemessen in Zyklen pro Millimeter ("cycles/mm") oder Linienpaaren pro Millimeter (LP/mm). Letzterer Parameter stellt ein Maß für die Bildauflösung, d.h. für den unterscheidbaren Linienabstand dar. Logischerweise ergibt sich für die niedrigsten Ortsfrequenzen nahe Null also ein Modulationstransfer bzw. eine Kontrastübertragung nahe 100 %, und dieser Kontrastübertragungswert fällt in Richtung höherer Ortsfrequenzen immer mehr ab. Dabei stellt in diesem Diagramm die obere Kurve den dem theoretischen, durch das Beugungslimit bedingten, Idealverlauf dar. Es ist offensichtlich, dass die Kurven für beide dargestellten Öffnungswinkel von 0.08° bzw. 0.75° (entsprechend einer nahezu geschlossenen und einer weiter geöffneten Blende bei einer Kamera) deutlich von dieser Idealkurve abweichen, wobei die Kurven für größere Öffnungswinkel stärker vom Idealverlauf abweichen. In den üblichen MTF-Darstellungen ("Modulations-Transfer-Funktion") werden für eine Blende oder einen Öffnungswinkel zwei Werte angegeben, nämlich ein Sagittal-oder Radialwert und ein Tangentialwert. Die Bezeichnungen "sagittal/radial" und "tangential" beziehen sich dabei auf einen Bildkreis zu einem Punkt, wobei der Radialwert r typischerweise höher als der Tangentialwert t ist. Für den Öffnungswinkel 0.08° sind in dieser Darstellung die beiden Werte jedoch noch nicht unterscheidbar. Demgegenüber liegt für 0.75° Kurve für die Tangentialwerte deutlich tiefer als die Kurve für die Radialwerte und weicht auch für noch niedrige Ortsfrequenzen deutlich von der Kurve für 0.08° ab.

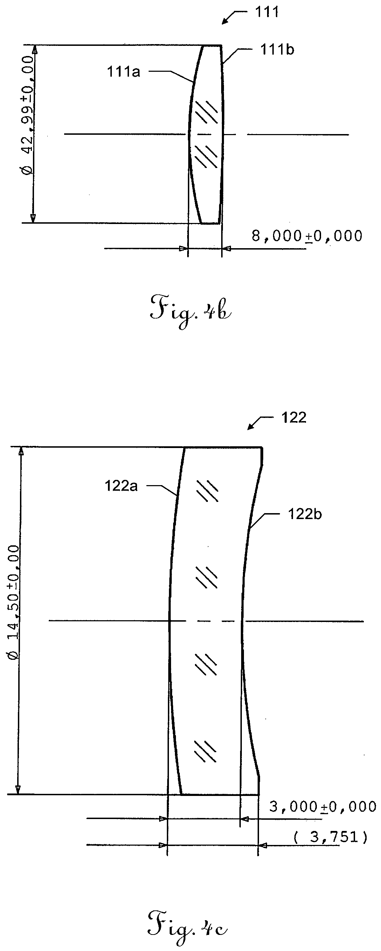

Fig. 4a zeigt ein abbildendes optisches System 1 mit Strahlengang A für ein erfindungsgemäßes geodätisches Fernrohr, mit einer Objektivlinse 111, einem Fokussierglied 122 und einem Okular 128. Die übrigen optischen Elemente im Strahlengang des erfindungsgemäßen abbildenden optischen Systems 1 entsprechen denjenigen von Fig. 3a. Insbesondere ist das abbildende optische System 1 mit seinen verschiedenen Bestandteilen abgestimmt für Erzeugung einer scharfen Abbildung eines anvisierten Zielobjekts im visuellen bis nahen infraroten Teil des Spektrums, insbesondere im Wellenlängenbereich zwischen 350 nm und 800 nm. Details des erfindungsgemäßen abbildenden optischen Systems 1 sind in den Figuren 4b und 4c dargestellt.

Fig. 4b illustriert beispielhaft mögliche Parameter für die Konstruktion der Objektivlinse 111 des erfindungsgemäßen optischen Systems, welche als ein Hybrid aus einer asphärischen Linse auf der (im Beobachtungsstrahlengang vom Zielobjekt kommend) Vorderseite 111a und einem diffraktiven optischen Element auf der Rückseite 111b ausgebildet ist. Beispielsweise kann die Objektivlinse als ein Glasträger (sphärische Vorderseite) mit einer rückseitig aufgeklebten, als eine Kunststoff-Replik ausgeführten, diffraktiven Struktur handeln. Die Objektivlinse 111 ersetzt ein Linsentriplett 11' gemäß der klassischen Anordnung nach Fig. 3a.

Die wichtigsten Parameter einer möglichen Ausgestaltung für die Objektivlinse 111 betragen:

| | |
|---|---|
| Fokale Länge: | 125.8 mm |
| Durchmesser: | 43 mm |
| Freie Apertur: | 40.03 mm |
| Dicke: | 8 mm |
| Glas: | Kronglas |
| Arbeitswellenlänge: | 450 nm - 635 nm |
| Design-Arbeitswellenlänge der diffraktiven Struktur: | 555 nm |
| Frontseite: | sphärisch (konvex) |
| Rückseite: | diffraktiv asphärisch |

Die Phasenfunktion der diffraktiven Struktur verwendet quadratische ($r^2$) und quartische (also biquadratische, $r^4$) radiale Terme zur Korrektur (insbesondere vollständigen Korrektur) der chromatischen Fehler:

$$\varphi(r) = C_1 \frac{2\pi \cdot m}{\lambda_C} r^2 + C_2 \frac{2\pi \cdot m}{\lambda_C} r^4$$

mit $C_i$: Koeffizienten der diffraktiven Struktur.

Die Phase muss modulo $2\pi m$ zerlegt werden, um das diffraktive Element zu erhalten.

Die Beugungsordnung beträgt hier m = 1.

In der Designphase wird die kleinste Periode kontrolliert, sie errechnet sich aus der maximalen Steigung:

$$\frac{d\varphi}{dr} \max(@\, 20mm) \Rightarrow kleinste Periode > 20\,\mu m$$

Das Maximum der Steigung befindet sich meist am Linsenrand, hier z.B. bei 20 mm.

Die feinste Periode sollte grösser als 20 $\mu$m sein.

Das Oberflächenprofil z berechnet sich dann mit $\lambda_C$ = 555 nm zu:

$$z(r) = \frac{\varphi(r) \cdot \lambda_C}{2\pi (n-1)}$$

Fig. 4c illustriert beispielhaft mögliche Parameter für die Konstruktion des Fokussierglieds 122 des erfindungsgemäßen optischen Systems, welches als ein Duplett aus einem diffraktiven optischen Element auf der Vorderseite 122a und einer asphärischen Linse auf der Rückseite 122b ausgebildet ist.

Die wichtigsten Parameter einer möglichen Ausgestaltung für das Fokusglied 122 betragen:

| | |
|---|---|
| Fokale Länge: | -73.3 mm (-83.6 mm ohne DOE) |
| Durchmesser: | 18 mm |
| Freie Apertur: | 15 mm |
| Dicke: | 3 mm |
| Glas: | Flintglas |
| Frontseite: | diffraktiv sphärisch |
| Rückseite: | sphärisch |
| Arbeitswellenlänge: | 450 nm - 635 nm |
| Design-Arbeitswellenlänge der diffraktiven Struktur: | 555 nm |

Die diffraktive Struktur ist an der Vorderseite des Fokusglieds angeordnet.

Die Phasenfunktion der Fresnel-Linse lautet:

$$\varphi(r) = C_1 \frac{2\pi \cdot m}{\lambda_C} r^2 + C_2 \frac{2\pi \cdot m}{\lambda_C} r^4$$

Das Oberflächenprofil z berechnet sich dann mit $\lambda_C$ = 555 nm zu:

$$z(r) = \frac{\varphi(r) \cdot \lambda_C}{2\pi(n-1)}$$

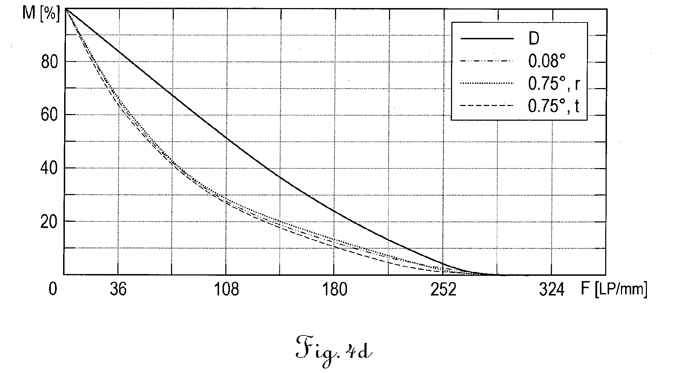

Fig. 4d zeigt, direkt vergleichbar mit der Darstellung von Fig. 3b, als Kriterium für die Abbildungsqualität des in Fig. 4a dargestellten erfindungsgemäßen optischen Systems des Beobachtungsstrahlengangs die sich am Ausgang des Beobachtungsstrahlengangs, d.h. am Okular 128, ergebende Modulation M als Funktion der Ortsfrequenz F. Im Vergleich zu Fig. 3b ist auffällig, dass alle Kurven für dieses System weniger stark vom theoretischen Idealverlauf entfernt sind und insbesondere die Kurven untereinander deutlich weniger Abweichungen aufweisen. Erst ab einer Ortsfrequenz von etwa 160 Linienpaaren pro Millimeter liegt die Kurve der Tangentialwerte für den Öffnungswinkel 0.75° klar tiefer als die Kurve der Radialwerte für diesen Winkel und die Kurve für den Öffnungswinkel 0.08°, wobei die letzteren beiden Kurven sich kaum erkennbar voneinander unterscheiden. - Dieses belegt, dass mit der erfindungsgemäßen optischen Anordnung eine deutlich bessere Abbildungsqualität als mit dem klassischen System erreicht wird.

Es versteht sich, dass diese dargestellten Figuren nur mögliche Ausführungsbeispiele schematisch darstellen. Die verschiedenen Ansätze können ebenso miteinander sowie mit Verfahren und geodätischen Fernrohren des Stands der Technik kombiniert werden.

**Patentansprüche**

**1.** Geodätisches Fernrohr für einen Theodoliten oder Totalstation, ein Nivellier oder einen Laserscanner, mit einem, eine optische Achse (A) definierenden, abbildenden optischen System (1) mit einem Beobachtungsstrahlengang zur Abbildung eines anvisierten Zielobjekts auf eine durch ein Okular (128) betrachtbare Zwischenbildebene und/oder auf einen Kamerasensor, zur Bereitstellung und/oder Erfassung eines Bildes des anvisierten Zielobjekts, wobei das abbildende optische System (1) mindestens zwei diffraktive optische Elemente im Beobachtungsstrahlengang aufweist, wobei das Fernrohr eine Objektivbaugruppe (111) umfasst und die Objektivbaugruppe ein erstes der mindestens zwei diffraktiven optischen Elemente als diffraktive Objektivkomponente umfasst,
**dadurch gekennzeichnet, dass**
das abbildende optische System ferner ein Fokussierglied umfasst und
das Fokussierglied ein zweites der mindestens zwei diffraktiven optischen Elemente als diffraktive Fokussierkomponente (122) enthält.

**2.** Geodätisches Fernrohr nach Anspruch 1,
**dadurch gekennzeichnet, dass**
mindestens eines der mindestens zwei diffraktiven optischen Elemente als Hybridlinse aus einer refraktiven, insbesondere asphärischen oder sphärischen, Linse mit einer diffraktiven Struktur ausgebildet ist.

**3.** Geodätisches Fernrohr nach Anspruch 1 oder 2,
**dadurch gekennzeichnet, dass**
die mindestens zwei diffraktiven optischen Elemente aus Glas, Kunststoff oder Kombinationen aus Glas und Kunststoff bestehen und/oder durch Replikationstechnik hergestellt sind.

**4.** Geodätisches Fernrohr nach einem der Ansprüche 1 bis 3,
**dadurch gekennzeichnet, dass**

- die diffraktive Objektivkomponente eine als Hybridlinse ausgebildete Objektivlinse (111) ist, und/oder
- die diffraktive Fokussierkomponente (122) entlang der optischen Achse beweglich angeordnet ist.

5. Geodätisches Fernrohr nach Anspruch 4,
**dadurch gekennzeichnet, dass**
die diffraktive Objektivkomponente ein Material aus Kronglas umfasst und/oder als diffraktive Struktur ein replikationstechnisch aufgebrachtes Schichtmaterial, insbesondere mit einer Schichtdicke von weniger als 0.15 mm, im Speziellen weniger als 0.05 mm, umfasst.

6. Geodätisches Fernrohr nach Anspruch 4 oder 5,
**dadurch gekennzeichnet, dass**
das Fokussierglied Flintglas und replikationstechnisch hergestellte Elemente oder eine diffraktive Kunststofflinse und eine sphärische Flintglaslinse umfasst.

7. Geodätisches Fernrohr nach einem der Ansprüche 4 bis 6,
**dadurch gekennzeichnet, dass**
die Objektivbaugruppe insgesamt aus nur einem optischen Element, das durch eines der mindestens zwei diffraktiven optischen Elemente gegeben ist, besteht.

8. Geodätisches Fernrohr nach einem der Ansprüche 4 bis 7,
**dadurch gekennzeichnet, dass**
das Fokussierglied insgesamt aus höchstens zwei optischen Elementen, wovon eines durch eines der mindestens zwei diffraktiven optischen Elemente gegeben ist, besteht, insbesondere wobei das Fokussierglied insgesamt aus nur einem optischen Element, das durch eines der mindestens zwei diffraktiven optischen Elemente gegeben ist, besteht.

9. Geodätisches Fernrohr nach einem der Ansprüche 1 bis 8, wobei der Beobachtungsstrahlengang ein Okular (128) aufweist und das optischen System (1) ausgebildet ist zur Abbildung des anvisierten Zielobjekts auf eine durch das Okular (128) betrachtbare Zwischenbildebene, zur Bereitstellung eines Bildes des anvisierten Zielobjekts,
**dadurch gekennzeichnet, dass**
das Okular (128) ein drittes diffraktives optisches Element umfasst.

10. Geodätisches Fernrohr nach einem der Ansprüche 1 bis 9,
**dadurch gekennzeichnet, dass**
mindestens eines der mindestens zwei diffraktiven optischen Elemente diffraktive und asphärische Strukturen aufweist, die durch Aufprägung oder Spritzguss hergestellt sind, insbesondere wobei Asphäritäten klein bemessen sind.

11. Geodätisches Fernrohr nach einem der Ansprüche 1 bis 10,
**dadurch gekennzeichnet, dass**
die mindestens zwei diffraktiven optischen Elemente für Farbkorrekturen mittels ihrer ersten Beugungsordnung und zugleich einer Unterdrückung der nullten und/oder höherer Beugungsordnungen, insbesondere mittels einer Erzeugung großer Streukreise bei einer Beugung für diese Beugungsordnungen, ausgebildet sind, insbesondere zu einer Abbildung verbleibender Intensität von höheren Beugungsordnungen mit einem Anteil von weniger als 5 % einer gesamten Abbildungsintensität.

12. Geodätisches Fernrohr nach einem der Ansprüche 1 bis 11,
**dadurch gekennzeichnet, dass**
bei mindestens einem der mindestens zwei diffraktiven optischen Elemente für eine Korrektur sphärischer Aberrationen eine überlagerte Asphäre verwendet wird.

13. Geodätisches Fernrohr nach einem der Ansprüche 1 bis 12,
**dadurch gekennzeichnet, dass**
bei mindestens einem der mindestens zwei diffraktiven optischen Elemente mindestens eine Linsenapertur verschiedene Zonen mit unterschiedlichen Eigenschaften aufweist, insbesondere wobei verschiedene Zonen unterschiedliche Brennweiten aufweisen, im Speziellen für eine Nahbereichsoptik für einen elektronischen Entfernungsmesser.

14. Geodätisches Fernrohr nach einem der Ansprüche 1 bis 13,
**dadurch gekennzeichnet, dass**
die mindestens zwei diffraktiven optischen Elemente ausgebildet sind zur Erfüllung verschiedener Funktionalitäten, insbesondere, gegebenenfalls zusätzlich, für eine spektrale oder nicht-spektrale Strahlaufteilung.

**15.** Geodätisches Fernrohr nach einem der Ansprüche 1 bis 14,
**dadurch gekennzeichnet, dass**
die mindestens zwei diffraktiven optischen Elemente ausgebildet sind zu einer Abbildung auf verschiedene optische Sensoren, insbesondere mittels eines erweiterten Fokusbereichs.

**Claims**

**1.** Geodetic telescope for a theodolite or total station, a leveling device or a laser scanner, comprising an imaging optical system (1) which defines an optical axis (A) and comprises an observation beam path for imaging a sighted target object on an intermediate image plane observable by an eyepiece (128) and/or on a camera sensor for providing and/or registering an image of the sighted target object,
wherein the imaging optical system (1) has at least two diffractive optical elements in the observation beam path, whereby the telescope comprises an objective assembly (111) and the objective assembly comprises a first one of the at least two diffractive optical elements as a diffractive objective component,
**characterized in that**
the imaging optical system further comprises a focusing member and the focusing member contains a second one of the at least two diffractive optical elements as diffractive focusing component (122).

**2.** Geodetic telescope according to Claim 1,
**characterized in that**
at least one of the at least two diffractive optical elements is embodied as a hybrid lens made of a refractive, in particular aspherical or spherical, lens with a diffractive structure.

**3.** Geodetic telescope according to Claim 1 or 2,
**characterized in that**
the at least two diffractive optical elements consist of glass, plastic or combinations of glass and plastic and/or are produced by replication technology.

**4.** Geodetic telescope according to any one of Claims 1 to 3,
**characterized in that**

- The diffractive objective component comprises an objective lens (111) embodied as a hybrid lens, and/or
- the diffractive focusing component (122) is movably arranged along the optical axis.

**5.** Geodetic telescope according to Claim 4,
**characterized in that**
the diffractive objective component comprises a material made of crown glass and/or, as a diffractive structure, comprises a layer material, in particular with a layer thickness of less than 0.15 mm, specifically less than 0.05 mm, applied by replication technology.

**6.** Geodetic telescope according to Claim 4 or 5,
**characterized in that**
the focusing member comprises flint glass and elements produced by replication technology or a diffractive plastic lens and a spherical flint glass lens.

**7.** Geodetic telescope according to any one of Claims 4 to 6,
**characterized in that**
the objective assembly overall consists of only one optical element which is provided by one of the at least two diffractive optical elements.

**8.** Geodetic telescope according to any one of Claims 4 to 7,
**characterized in that**
the focusing member overall consists of at most two optical elements of which one is provided by one of the at least two diffractive optical elements, in particular wherein the focusing member overall consists of only one optical element which is provided by one of the at least two diffractive optical elements.

**9.** Geodetic telescope according to any one of Claims 1 to 8, wherein the observation beam path has an eyepiece (128) and the optical system (1) is embodied for imaging the sighted target object on an intermediate image plane observable through the eyepiece (128) for providing an image of the sighted target object,
**characterized in that**
the eyepiece (128) comprises a third diffractive optical element.

10. Geodetic telescope according to any one of Claims 1 to 9,
**characterized in that**
at least one of the at least two diffractive optical elements has diffractive and aspherical structures, which are produced by embossing or injection molding, in particular wherein the asphericities have small dimensions.

11. Geodetic telescope according to any one of Claims 1 to 10,
**characterized in that**
the at least two diffractive optical elements are embodied for chromatic corrections by means of the first order of diffraction thereof and, simultaneously, for suppressing the zero and/or higher orders of diffraction, in particular by means of generating large circles of confusion in the case of diffraction for these orders of diffraction, in particular for imaging remaining intensity of higher orders of diffraction with a component of less than 5% of an overall imaging intensity.

12. Geodetic telescope according to any one of Claims 1 to 11,
**characterized in that**
a superposed asphere is used in at least one of the at least two diffractive optical elements for correcting spherical aberrations.

13. Geodetic telescope according to any one of Claims 1 to 12,
**characterized in that**
at least one lens aperture has different zones with different properties in at least one of the at least two diffractive optical elements, in particular wherein different zones have different focal lengths, specifically for near-field optics for an electronic rangefinder.

14. Geodetic telescope according to any one of Claims 1 to 13,
**characterized in that**
the at least two diffractive optical elements are embodied for fulfilling different functionalities, in particular, possibly additionally, for spectral or non-spectral beam splitting.

15. Geodetic telescope according to any one of Claims 1 to 14,
**characterized in that**
the at least two diffractive optical elements are embodied for imaging on different optical sensors, in particular by means of an extended focal range.

**Revendications**

1. Télescope géodésique pour un théodolite ou une station totale, un instrument de mise à niveau ou un scanner laser, comportant un système optique de formation d'image (1) qui définit un axe optique (A) et présente un trajet de faisceau d'observation pour former l'image d'un objet cible visé sur un plan d'image intermédiaire observable à travers un oculaire (128) et/ou sur un capteur photographique pour fournir et/ou acquérir une image de l'objet cible visé,
dans lequel
le système optique de formation d'image (1) présente au moins deux éléments optiques diffractifs dans le trajet de faisceau d'observation, le télescope comprenant un module objectif (111) et le module objectif comprenant un premier desdits au moins deux éléments optiques diffractifs en tant que composant d'objectif diffractif,
**caractérisé en ce que**
le système optique de formation d'image comprend en outre un élément de focalisation et ledit élément de focalisation contient un deuxième desdits au moins deux éléments optiques diffractifs en tant que composant de focalisation diffractif (122).

2. Télescope géodésique selon la revendication 1,
**caractérisé en ce**

**qu'**au moins l'un desdits au moins deux éléments optiques diffractifs est réalisé sous la forme d'une lentille hybride composée d'une lentille réfractive, en particulier asphérique ou sphérique, ayant une structure diffractive.

3. Télescope géodésique selon la revendication 1 ou 2,
**caractérisé en ce que**
lesdits au moins deux éléments optiques diffractifs sont constitués de verre, de matière plastique ou de combinaisons de verre et de matière plastique et/ou sont fabriqués par une technique de réplication.

4. Télescope géodésique selon l'une des revendications 1 à 3,
**caractérisé en ce que**

- le composant d'objectif diffractif est une lentille d'objectif (111) réalisée sous la forme d'une lentille hybride, et/ou
- le composant de focalisation diffractif (122) est disposé de manière mobile le long de l'axe optique.

5. Télescope géodésique selon la revendication 4,
**caractérisé en ce que**
le composant d'objectif diffractif comprend un matériau en verre crown et/ou comprend comme structure diffractive un matériau en couches appliqué par une technique de réplication, en particulier avec une épaisseur de couche inférieure à 0,15 mm, spécifiquement inférieure à 0,05 mm.

6. Télescope géodésique selon la revendication 4 ou 5,
**caractérisé en ce que**
l'élément de focalisation comprend du verre flint et des éléments fabriqués par une technique de réplication ou une lentille diffractive en matière plastique et une lentille sphérique en verre flint.

7. Télescope géodésique selon l'une des revendications 4 à 6,
**caractérisé en ce que**
le module objectif dans son ensemble est constitué d'un seul élément optique qui est formé par l'un desdits au moins deux éléments optiques diffractifs.

8. Télescope géodésique selon l'une des revendications 4 à 7,
**caractérisé en ce que**
l'élément de focalisation dans son ensemble est constitué d'au plus deux éléments optiques, dont l'un est formé par l'un desdits au moins deux éléments optiques diffractifs, l'élément de focalisation dans son ensemble étant en particulier constitué d'un seul élément optique qui est formé par l'un desdits au moins deux éléments optiques diffractifs.

9. Télescope géodésique selon l'une des revendications 1 à 8,
dans lequel le trajet de faisceau d'observation présente un oculaire (128) et le système optique (1) est conçu pour former l'image de l'objet cible visé sur un plan d'image intermédiaire observable à travers l'oculaire (128) pour fournir une image de de l'objet cible visé,
**caractérisé en ce que**
l'oculaire (128) comprend un troisième élément optique diffractif.

10. Télescope géodésique selon l'une des revendications 1 à 9,
**caractérisé en ce**
**qu'**au moins l'un desdits au moins deux éléments optiques diffractifs présente des structures diffractives et asphériques qui sont réalisées par impression ou moulage par injection, les asphéricités étant en particulier de petite dimension.

11. Télescope géodésique selon l'une des revendications 1 à 10,
**caractérisé en ce que**
lesdits au moins deux éléments optiques diffractifs sont conçus pour des corrections de couleur au moyen de leur premier ordre de diffraction et en même temps une suppression des ordres de diffraction zéro et/ou plus élevés, en particulier au moyen d'une production de grands cercles de diffusion à une diffraction pour ces ordres de diffraction, en particulier pour une formation d'image d'intensité résiduelle d'ordres de diffraction plus élevés avec une proportion inférieure à 5 % d'une intensité de formation d'image totale.

**12.** Télescope géodésique selon l'une des revendications 1 à 11,
**caractérisé en ce que**,
pour au moins l'un desdits au moins deux éléments optiques diffractifs, on utilise une asphère superposée pour une correction des aberrations sphériques.

**13.** Télescope géodésique selon l'une des revendications 1 à 12,
**caractérisé en ce que**,
pour au moins l'un desdits au moins deux éléments optiques diffractifs, au moins une ouverture de lentille présente des zones différentes ayant des propriétés différentes, en particulier des zones différentes présentant des distances focales différentes, spécifiquement pour une optique de zone proche pour un télémètre électronique.

**14.** Télescope géodésique selon l'une des revendications 1 à 13,
**caractérisé en ce que**
lesdits au moins deux éléments optiques diffractifs sont conçus pour remplir différentes fonctionnalités, en particulier, le cas échéant en plus, pour une division de faisceau spectrale ou non spectrale.

**15.** Télescope géodésique selon l'une des revendications 1 à 14,
**caractérisé en ce que**
lesdits au moins deux éléments optiques diffractifs sont conçus pour former une image sur différents capteurs optiques, en particulier au moyen d'une plage de mise au point étendue.

Fig. 1

Fig. 2a

*Fig. 2b*

*Fig. 3a*

Fig. 3b

Fig. 4a

111

111a      111b

Ø 42,99±0,00

8,000±0,000

Fig. 4b

122

122a      122b

Ø 14,50±0,00

3,000±0,000

( 3,751)

Fig. 4c

Fig. 4d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19941638 C1
- US 6501541 B2
- US 6587244 B1
- WO 2010097346 A1
- US 2013063812 A1
- US 5148314 A
- EP 1081459 B1


**In der Beschreibung aufgeführte Nicht-Patentliteratur**

- Bauelemente der Optik. Optische Gläser. Carl Hanser Verlag